# EUROPEAN PATENT APPLICATION

(11) **EP 2 194 449 A1**
(43) Date of publication of application: **09.06.2010**
(21) Application number: 08833741.5
(22) Date of filing: 24.09.2008
(51) Int. Cl.: G06F 3/048, G06F 3/038

(54) **INFORMATION DISPLAY DEVICE**

(30) Priority: 27.09.2007 JP 2007250372
(71) Applicant: Hitachi Medical Corporation, Tokyo 101-0021 (JP)
(72) Inventor: TOKUNAGA, Tatsuya, Tokyo 100-8220 (JP); TAKANO, Masaki, Tokyo 100-8220 (JP); MIYAOKA, Takehiro, Tokyo 101-0021 (JP)
(74) Representative: Strehl Schübel-Hopf & Partner
(86) International application number: PCT/JP2008/067147
(87) International publication number: WO 2009/041411

(57) **Abstract**

An information display device having an operability-improved trackball is provided. A control unit has a mechanism for displaying in such a manner that a second information display region is provided separately from a first information display region, an operation button region is arranged and displayed in a region between them, the second information display region is set as a cursor display prohibition region, and even if the operation is vigorously executed by operating the trackball, a cursor does not enter the second information display region but the cursor stops in the operation button region and one of the operation buttons in the operation button region is selected.

## Description

### INCORPORATION BY REFERENCE

The present application claims priority from Japanese Patent Application JP2007-250372 filed on September 27, 2007, the content of which is hereby incorporated by reference into this application.

### TECHNICAL FIELD

The invention relates to an information processing device for displaying a menu display screen having a plurality of operation buttons onto a display screen and executing various kinds of operations on the menu display screen.

### BACKGROUND ART

In recent years, in personal computers and various kinds of information processing devices, various kinds of operating instructions are made by a cursor setting unit in many cases. A mouse and a trackball are provided for the cursor setting unit. According to the mouse, however, a ball of a trackball mechanism is rotated by physically moving a mouse main body. Particularly, in the case of moving a cursor by a long distance, the operation for moving the mouse main body from a point A to a point B, temporarily pulling up the mouse main body, returning it to the point A, and moving it to the point B again has to be repeated.
There is a trackball as a device adapted to compensate for such a drawback of the mouse. According to the trackball, the operator can simply move the cursor on the display screen by rotating the ball arranged on an upper surface of the main body in an arbitrary direction by a finger tip. Therefore, according to the trackball, an operation similar to that of the mouse can be realized even if there is no operation table surface.
The above technique has been disclosed in, for example, the following Patent Documents 1 and 2.

Patent Document 1: Official Gazette of JP-A-2003-29896
Patent Document 2: Official Gazette of JP-A-2004-271439

### DISCLOSURE OF INVENTION

### PROBLEM TO BE SOLVED BY THE INVENTION

However, according to the trackball, there is such an unsolved problem that it is difficult for the operator to grasp a correspondence between a rotation amount of the ball and the movement distance of the cursor.

It is, therefore, an object of the invention to provide an information processing device which can improve an operability of a cursor setting unit.

### MEANS FOR SOLVING THE PROBLEM

As a typical device of the invention, according to the invention, there can be mentioned an information processing device comprising: a display unit (100) to which each of display regions of a first information display region (111) for displaying various kinds of information into a predetermined region on a display screen (108) and an operation button region (115) which is arranged adjacently to the first information display region (111) and is used to change the information displayed in the first information display region (111) is allocated and which displays a cursor (103) that is displayed at an arbitrary position on the display screen (108); a cursor setting unit (104) for setting a movement amount and a moving direction of the displayed cursor (103) and generating an operation signal according to the movement amount and the moving direction of the cursor (103); and a control unit (105) for controlling displays of each region on the display unit (100) and the cursor on the basis of the generated operation signal, wherein when a fact that the cursor (103) displayed in the first information display region (111) has crossed a boundary with the operation button region (115) and moved is detected from the operation signal generated by the cursor setting unit (104), the control unit (105) controls so as to display the cursor (103) into the operation button region (115).

### ADVANTAGES OF THE INVENTION

According to the invention, an information processing device which can improve an operability of a cursor setting unit can be provided.
Other objects, features, and advantages of the invention will become apparent from the following description of embodiments of the invention with reference to the accompanying drawings.

### BEST MODE FOR CARRYING OUT THE INVENTION

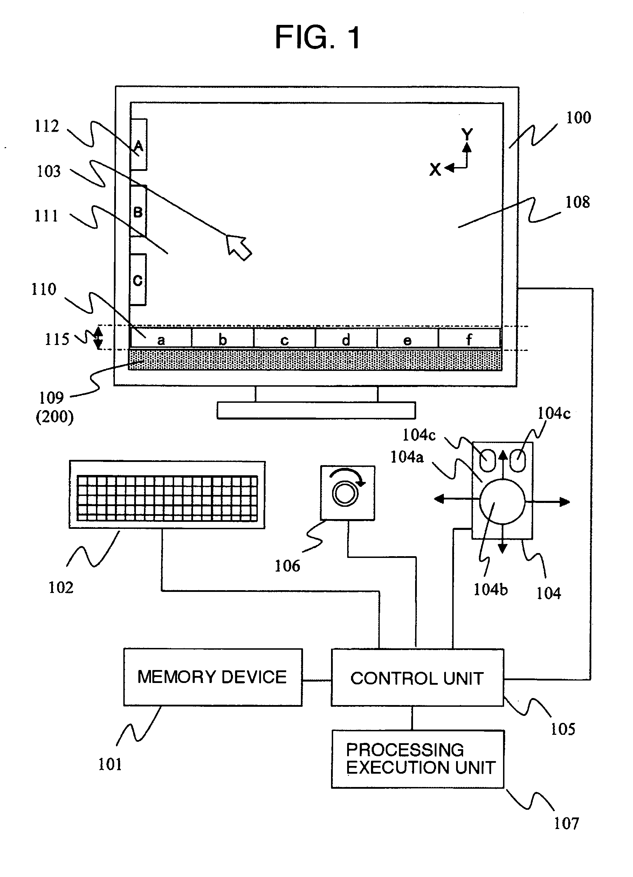

An information display device using a trackball according to the invention will be described in detail hereinbelow with reference to Figs. 1 to 4. The same portions, directions, and the like are designated by the same reference numerals and their overlapped description is omitted here. In the description, in the case of expressing "upper, lower, right, left, vertical, and lateral" of a display screen, a viewpoint of the operator in a state after the display device is attached is used as a reference.

Fig. 1 is a diagram showing a block construction of the information display device having a trackball according to an embodiment. The information processing device mentioned above is constructed by including: a display device 100 having a display screen 108 which can display various kinds of information; a memory device 101 in which various kinds of operating programs and information such as display screen information and the like which are displayed on the display device 100 have been stored; a keyboard 102 which can input character information and detailed operating instructions; a trackball 104 which can operate and instruct moving and deciding operations of a cursor 103 which is displayed on the display screen 108; a control unit 105 for integratedly controlling the operation of the information processing device; and a dial type encoder 106 which can input the detailed operating instructions. In the embodiment, a printer (not shown) as an output device, a communicating apparatus (not shown) which can connect to another equipment and can connect to an Internet, and the like can be also equipped. In the embodiment, a processing execution unit 107 which is made operative by the operating instructions based on a menu display screen or an operating display screen which is displayed on the display screen 108 is connected. The keyboard 102 and the dial type encoder 106 are used as necessary and are not an indispensable construction in the embodiment.

In the embodiment, an ultrasonic diagnosing device is connected as a processing execution unit 107. That is, the information processing device corresponds to a processing device of the ultrasonic diagnosing device. The information processing device of the embodiment can execute general information processes and the embodiment is not necessarily limited to the ultrasonic diagnosing device.

First, the trackball 104 will be described. The trackball 104 according to the embodiment is constructed by including: a trackball main body 104a; a ball 104b which is arranged on an upper surface of the trackball main body 104a; and a pair of operation buttons 104c. The trackball main body 104a can be used by directly being attached to a main body (not shown) of the ultrasonic diagnosing device or by being attached to a predetermined position of the device. That is, the trackball main body 104a is fixedly attached so as not to move at the time of operating. The ball 104b is attached so as to be rotatable in an arbitrary direction. A rotation of the ball 104b is detected by a well-known rotary roller detecting unit (not shown) provided in the trackball main body 104a. Its rotation amount and rotating direction are conversion processed into a movement amount and a moving direction of the cursor 103 by the control unit 105. Further, a pair of operation buttons 104c correspond to a left click and a right click of the mouse and an arbitrary function can be set in correspondence to the program. In the embodiment, the selecting and deciding operations are allocated to the left operation button 104c and the operation to display a submenu window (not shown) is allocated to the right operation button 104c. The function corresponding to the left operation button 104c may be allocated by providing a switch mechanism in a lower portion of the ball 104b and executed by pressing the ball 104b.

Subsequently, the dial type encoder 106 will be described. The encoder is a well-known encoder having a dial part which can be rotated clockwise and counterclockwise. By rotating the dial clockwise or counterclockwise, a process according to its rotation amount can be executed. For example, in the ultrasonic diagnosing device according to the embodiment, the brightness of an image displayed on the display screen 108 can be adjusted or a focal point can be adjusted.

Subsequently, the display screen 108 will be described. The display screen 108 shown in Fig. 1 is in a state where a power source of the information processing device is ON. On the display screen 108, there are displayed: a first information display region 111 for displaying an echo image or the like in the human body; a second information display region 109 for displaying the brightness of the first information display region, focal point information, or the like; an operation button region 110 displayed between the first information display region and the second information display region; tabs A to C 112 for displaying menu items or the like to change a display screen of the first information display region onto the display screen; and the cursor 103. The cursor 103 can be moved in the upper, lower, right, and left directions by the ball operation of the trackball 104. Operation buttons a to f are sequentially arranged in the lateral direction in the operation button region 110. When the cursor 103 exists at a position where it overlaps with the display of each operation button, each operation button changes to a selection display mode by changing, for example, the color so as to indicate that the operation button has been selected. Therefore, the operator can identify that a specified operation button is the operation button which can be selected. That is, each of the operation buttons a to f has a selection detection region at least a part of which overlaps with almost of the display region of the selection button allocated to each operation button. When the cursor 103 enters the selection detection region, the display of the predetermined selection button changes to the selection display mode. By pressing the operation button 104c, the deciding operation is executed. The control unit detects that one of the operation buttons a to f has been decided and executes the processing contents allocated to the operation button. In the embodiment, it is assumed that the lateral direction (right/left direction) in a state where the device has been set is the X direction and the vertical direction (upper/lower direction) is the Y direction. Reference numeral 115 denotes a width in the Y direction of the operation button region 110.

One of large features of the information processing device is a point that the second information display region 109 is displayed on the display screen 108 of the display device 100 and the region 109 is provided as a cursor display prohibition region 200 where the cursor 103 is not displayed. That is, in the first information display region 111 and the operation button region 110 as regions out of the cursor display prohibition region 200, the cursor 103 is moved in the upper, lower, right, and left directions in accordance with operating instructions of the trackball 104. However, in response to a movement operating instruction to the cursor display prohibition region, the cursor 103 does not enter the cursor display prohibition region 200 but stops in the operation button region 110 on this side of the region 200. Therefore, the display of various kinds of information which is displayed in the cursor display prohibition region 200 and the cursor 103 overlap, a part of the information is not hidden by the cursor 103, and the display screen can be easily seen. Consequently, the operator does not need to move the cursor 103 in order to see target information displayed in the second information display region 109 and the operability is improved. Since the display of the various kinds of information which is displayed in the cursor display prohibition region 200 and the cursor 103 do not overlap, such an erroneous recognition that the operator can directly add the changing operation or the like by the cursor 103 to the information displayed in the second information display region 109 can be prevented.

One of the large features of the information processing device is a point that the cursor display prohibition region 200 is provided at the lowest position of the display screen 108 and the operation button region 110 where the operation buttons a to f are sequentially arranged is provided just over the cursor display prohibition region 200. That is, the operation button region 110 is arranged adjacently to the region serving as both of the second information display region 109 and the cursor display prohibition region 200. In the information processing device, since the operation button region 110 is arranged just over the cursor display prohibition region 200, even if the downward movement operating instruction is made to the cursor 103, the cursor stops in the operation button region 110 on this side of the cursor display prohibition region 200. Therefore, in order to select one of the operation buttons a to f, even if the operator vigorously rotated the ball 104b downwardly so as to move the cursor 103 downwardly, the cursor 103 stops at one of the operation buttons a to f in the operation button region 110 and there is no need to perform the fine adjustment in the upper/lower direction of the selection button. Thus, the selecting operation of the selection button can be executed in a short time and the operability is improved. In addition, like operation buttons a to f, by arranging the operation buttons to the right and left edges of the display screen and by arranging the selection detection regions to the right and left edges of the display screen, even if the operator vigorously rotated the ball 104b in the lower left or lower right direction, he can always select the operation button a or f. Therefore, the fine adjusting operation becomes unnecessary and the target operation button can be selected by the one operation of the ball 104b and the operability is improved. Although the cursor display prohibition region 200 is provided in the lower position and the operation button region 110 is provided just above the region 200 in the embodiment, the position of the cursor display prohibition region 200 is not limited to the lower position but may be set to either the right edge or the left edge or may be set to the upper edge. It is an important point that the cursor display prohibition region 200 is located at one of the four corners of the display screen 108 and the operation button region 110 is arranged between the information display region 111 and the cursor display prohibition region 200.

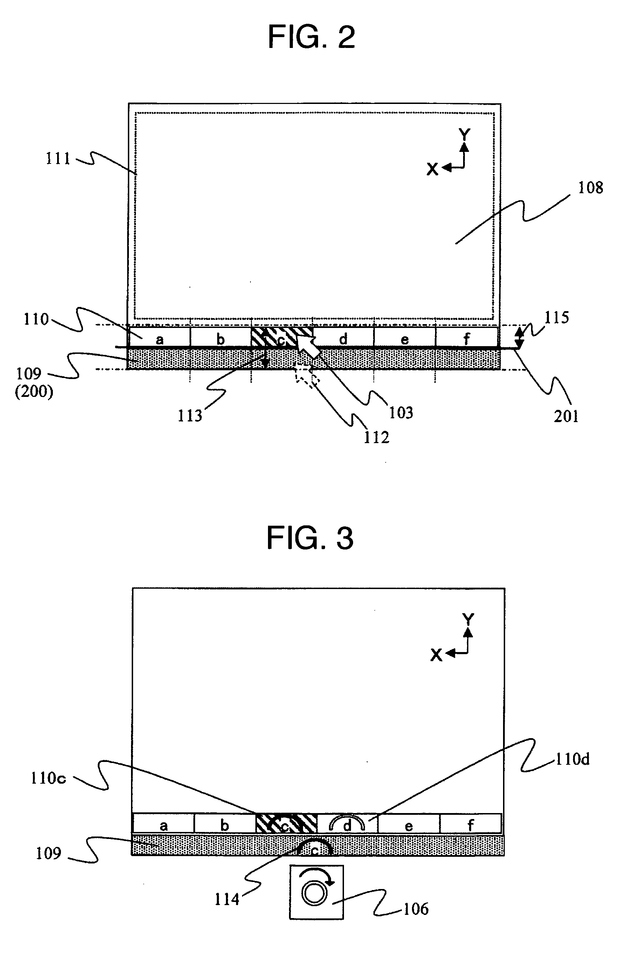

Subsequently, an information display device according to the embodiment will be described further in detail by using Fig. 2. Fig. 2 is a diagram showing the display screen 108 of the display device 100. The tab 112 is omitted. The display screen 108 has the first information display region 111, the operation button region 110, and the second information display region 109 and is displayed. As illustrated in the diagram, the operation button region 110 is arranged between the first information display region 111 and the second information display region 109 and is displayed. Further, the operation button region 110 is arranged so as to be adjacent to the second information display region 109 and is displayed. The cursor 103 which is moved from the first information display region 111 stops in the operation button region 110. Therefore, even if the ball 104b is vigorously operated, the operation button in the operation button region 110 can be selected. The operation button region 110 is a belt-shaped region extending in the X direction, is displayed with the same width as that of the display screen 108 for the X direction, and is constructed with a predetermined width for the Y direction. Further, also with respect to the second information display region 109, this region is a belt-shaped region, is constructed with the same width as that of the display screen 108 for the X direction, and is constructed with a predetermined width for the Y direction. Reference numeral 201 denotes a boundary line (actually not shown) between the operation button region 110 and the second information display region 109.

In the ultrasonic diagnosing device as an embodiment, an echo image in the human body detected by using an ultrasonic wave is displayed in the information display region 111. While operating the trackball 104, the doctor can diagnose an examinee by looking at the echo display screen. The operation buttons a to f are operation buttons for adjusting, for example, the brightness, contrast, reduced scale, focal point, and the like of the echo display screen. When the brightness is insufficient, the cursor 103 is matched with the operation button corresponding to the brightness adjustment and, after an operation button 103c is depressed, by executing a desired operation, the brightness can be adjusted to a bright state. The second information display region 109 displays information different from that in the first information display region. The present time, focal point, reduced scale, memory use amount, and the like are displayed in the second information display region 109.

Subsequently, the moving operation of the cursor around the second information display region 109 will be described by using Fig. 2. Fig. 2 is a diagram showing a state where the cursor 103 has maximally been moved to the lower side. A cursor 112 shown by a broken line indicates a virtual cursor 112. The virtual cursor 112 is a cursor which is not actually displayed but is displayed in order to enable a description to be easily understood. Reference numeral 113 denotes a width in the Y direction of a selection detection region for detecting that the operation button in the operation button region has been selected. The control unit 105 detects XY coordinates which are specified by the X-axis direction and the Y-axis direction and allows the cursor 103 to be displayed on the display screen 108. When the ball 104b is operated, the control unit 105 detects a rotation amount and a rotating direction of the ball 104b and allows the cursor 103 to be moved according to the rotation amount and the rotating direction. The control unit 105 controls the virtual cursor 112. In the first information display region 111 and the operation button region 110, the cursor 103 moves while being displayed so that the virtual cursor 112 and the cursor 103 overlap. When the ball 104b is operated so that the virtual cursor 112 enters the XY coordinates in the operation button region 110, the cursor 103 is displayed at the same XY coordinates as those of the virtual cursor 112 and is arrangement displayed so as to show that the operation button in which the cursor 103 is located has been selected. Subsequently, when the ball 104b is further operated so that the cursor 103 moves to the lower position where the second information display region 109 is arrangement displayed, the virtual cursor 112 moves into the second information display region 109 (cursor display prohibition region 200). However, the cursor 103 which is actually displayed is displayed in a state where it is held on the operation button in the operation button region 110. The cursor 103 is not moved to the second information display region 109. Therefore, the operation buttons are displayed for selection. That is, the selection detection region which reacts to the position coordinates of the virtual cursor which has previously been allocated is provided for the selection buttons a to f. The selection detection region extends to the second information display region 109 as shown by the range 113 in Fig. 2. Therefore, when the virtual cursor 112 exists at the coordinates in the second information display region, the cursor 103 is displayed on a selection button as if the selection button locating in the Y direction of the virtual cursor XY coordinates is selected and the display for the selection is performed. Although the operation button c is shown in Fig. 2, this is true of the operation buttons a, b, and d to f.

In this manner, in the embodiment, since the cursor 103 is not displayed in the second information display region 109 as a cursor display prohibition region 200 and the fine adjustment can be omitted as mentioned above, a visibility of the information which is displayed in the second information display region 109 is improved and the target operation button can be rapidly selected because the fine adjustment of the cursor 103 is unnecessary. Thus, the operability is improved.

As a problem of the trackball 104, there is such a problem that it is difficult to perform a linear motion. This is because according to the operation of the trackball 104, since the ball 104b is operated while a finger tip or a palm is come into contact with the ball or is operated while the ball 104b is repetitively rotated by the finger tip or the palm, it is difficult to always rotate the ball by a predetermined directional component. According to such an operation of the trackball 104 that it is difficult to perform the linear motion as mentioned above, it is also naturally difficult that the cursor 103 which operates in response to the ball 104b performs the linear motion.

In this manner, in the embodiment, as for the above problem, since the width 113 of the selection detection region is wider than the width 115 in the Y direction of the operation button region 110 which is actually displayed by an amount corresponding to the width of the second information display region 109, for example, in the case where the cursor 103 is moved from the operation button c onto the operation button e, even if the Y directional component slightly entered the rotation of the ball 104b, the virtual cursor 112 can be easily moved in the X direction while being held in the range of the width 113 of the selection detection region. In other words, in the case where the virtual cursor 112 is located at the Y coordinate just under the second information display region 109, in order to move the cursor 103 to the first information display region 111 side out of the operation button region 110, it is necessary to rotate the ball 104b by an amount corresponding to at least the width 113 in the Y direction. Further in other words, in the case where the virtual cursor 112 is located at the Y coordinate just under the second information display region 109, even if the ball 104b in the Y direction (upper/lower direction) is operated by an amount corresponding to the width 113 in the Y direction of the second information display region 109, the cursor 103 is displayed so as to remain on the operation button. Since there is the width 113 of the selection detection region which is larger in the Y direction for the selection of the operation buttons arranged in the lateral direction in the operation button region as mentioned above, such a situation that the cursor 103 carelessly moves out of the operation button region 110 is avoided and the operability is improved.

In the case where the cursor 103 is displayed on the specific selection button in the operation button region 110, even when the cursor is moved to another operation button, it is desirable to enable each operation button to be easily selected. Therefore, in order to widely assure the width in the X direction of the selection detection region of each operation button and to widely assure the width in the Y direction of the first information display region 111, as a shape of each operation button, it is desirable to sequentially arrange the operation buttons in the X direction into a laterally long shape having a width which is wider in the X direction than in the Y direction.

Subsequently, the operation of the dial type encoder 106 will be described by using Fig. 3. In Fig. 3, the operation buttons c and d in the operation button region 110 are a button to adjust the brightness of the first information display region 111 and a button to adjust the focal point and each function is allocated to each button. In Fig. 3, the selection display mode as a state where the operation button c has been selected is made. The display of the cursor 103 is omitted. This state is a state after the deciding operation of the operation button c is executed for the operation button c. To show that the operation button c has been selected, a state showing that the operation button c has been selected is displayed in the second information display region 109. Since the operation button c is a button to adjust the brightness, a brightness adjusting mode has been set. When the operator executes the operation to rotate the dial of the dial type encoder 106 clockwise, the control unit 105 detects the operation and controls the display screen so that the brightness of the first information display region 111 is increased. A gauge of an indicator 114 shown in the second information display region 109 changes according to the brightness of the display screen. When the operation button d for adjusting the focal point is selected by using the cursor and the deciding operation is executed in a manner similar to the above, a display in which the operation button c in a non-selection state is made from now on and the display changes to the selection display mode in which the operation button d is in a selection state. At the same time, the indicator 114 in the second information display region 109 is changed to the gauge showing a level of the focal point. The level can be changed by using the dial type encoder 106 and the focal point level of the first information display region 111 is changed in accordance with the operation.

As mentioned above, the second information display region 109 also functions as a region for displaying setting information such as brightness, focal point, and the like of the first information display region 111. Thus, in the case where the cursor 103 is displayed in the second information display region 109, the cursor 103 and the indicator 114 overlap, so that it becomes difficult to read the information of the indicator 114. Therefore, when the display screen enters such a state, before the dial type encoder 106 is operated, it is necessary to temporarily move the cursor 103 to a position where it does not overlap with the indicator 114 and to subsequently operate the dial type encoder 106, so that the operation becomes complicated. In the embodiment, such a phenomenon cannot occur owing to the cursor display prohibition region 200. Consequently, the operability is improved. By switching the display of the operation buttons a to f in accordance with the situation, the function can be allocated to one dial type encoder 106 without limit.

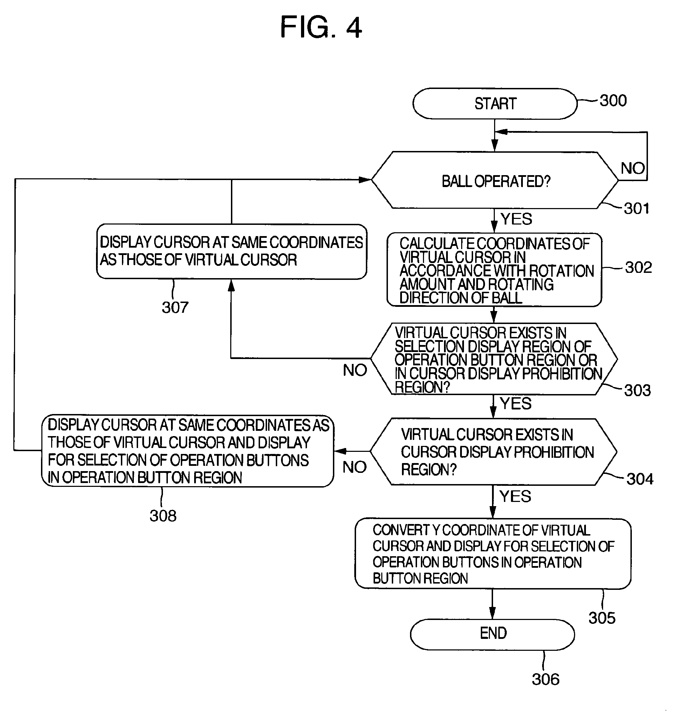

Subsequently, an operating flow will be described in detail by using Fig. 4. The flow until the cursor 103 displays for the selection of the operation buttons a to f from the first information display region 111 will be described here. The inputting operation of the operation buttons a to f is omitted. The operation in which the inputting operation of the operation buttons a to f is executed by the operation button 104c and which has previously been allocated is executed in the processing execution unit 107.

At the start of 300, the virtual cursor 112 is in a state where it exists on the XY coordinates in the first information display region 111. That is, in the first information display region 111, since the XY coordinates of the virtual cursor 112 become the XY coordinates of the cursor 103 as they are, the cursor 103 is displayed at the position of the coordinates of the virtual cursor 112.

Subsequently, the motion of the ball 104b of the trackball 104 is monitored by a control unit 105. That is, whether or not the operator is operating the ball 104b is monitored (301). If the state of the ball 104b does not change, the control unit does not perform the movement display of the cursor until the state of the ball 104b changes. That is, if there is no change in state of the ball 104b, the cursor 103 is continuously displayed as a state where the cursor 103 is at rest at the coordinates of the start 300 state. When the state of the ball 104b changes here, that is, when the operator operates the ball 104b, a sensor built in the trackball main body 104a detects operation information and transfers the information of the rotation amount and the rotating direction of the ball 104b to the control unit 105. That is, the control unit 105 detects a signal transmitted from the trackball 104. The control unit 105 calculates the coordinates of the virtual cursor 112 after the operation on the basis of the coordinates of the virtual cursor 112 at the start point of time and the information of the rotation amount and the rotating direction of the ball 104b (302).

Subsequently, the control unit 105 discriminates whether or not the XY coordinates of the virtual cursor 112 calculated in 302 exist in the selection display region of the operation button region 110 or in the cursor display prohibition region 200 by collating with the region information which has previously been stored in the memory device 101 (303). If they are not the coordinates in those regions, since such an operation that the virtual cursor 112 moves in the first information display region 111 is executed, the cursor 103 is displayed at the same XY coordinates as the XY coordinates of the virtual cursor 112 after the change of the coordinates (307).

When they exist in one of those regions, the control unit 105 discriminates whether or not the XY coordinates of the virtual cursor 112 after the change of the coordinates exist in the cursor display prohibition region 200 by collating with the region information which has previously been stored in the memory device 101 (304). If the virtual cursor 112 does not exist at the coordinates in the cursor display prohibition region 200 here, since such an operation that the virtual cursor 112 is moved in the selection display region of the operation button region 110 is executed. Therefore, the cursor 103 is displayed at the same XY coordinates as the XY coordinates of the virtual cursor 112 after the movement and one of the operation buttons 110a to 110f corresponding to the selection display region of the operation button region 110 is displayed for the selection (308).

As a result of the collation, if the control unit 105 detects that the coordinates of the virtual cursor 112 are the XY coordinates in the cursor display prohibition region 200 (YES in 304), the control unit 105 converts the Y coordinate in the XY coordinates of the virtual cursor 112 in the cursor display prohibition region 200 and displays the cursor 103 so that the cursor 103 is displayed on the operation button in the operation button region 110 to which the X coordinate corresponds. Thus, even if such an operation as to move the ball 104b into the cursor display prohibition region 200 is executed, the cursor 103 is not displayed in this region as a cursor display prohibition region 200 and also serving as a second information display region 109 but one of the operation buttons a to f in the operation button region 110 is displayed for the selection and the operation is finished (306).

One of features of the embodiment is a point that as described in 305, when such an instruction that the virtual cursor 112 moves into the cursor display prohibition region 200 is made, the cursor 103 which is actually displayed is not displayed in the cursor display prohibition region 200 but one of the operation buttons a to f in the operation button region 110 is selected.

That is, when the control unit detects the operation signal adapted to allow the cursor 103 displayed in the first information display region 111 to move toward the second information display region 109, that is, the operation signal of a movement amount larger than a distance between the position of the cursor 103 and the boundary between the operation button region 110 and the second information display region 109, the control unit allows the cursor 103 to move toward the operation button region 110 and allows the cursor 103 to be displayed in the operation button region.

Therefore, even if the operation is vigorously executed by the operation of the trackball 104, the cursor 103 is not displayed in the second information display region 109 as a cursor display prohibition region 200 but one of the operation buttons a to f can be always selected, so that the operability is improved.

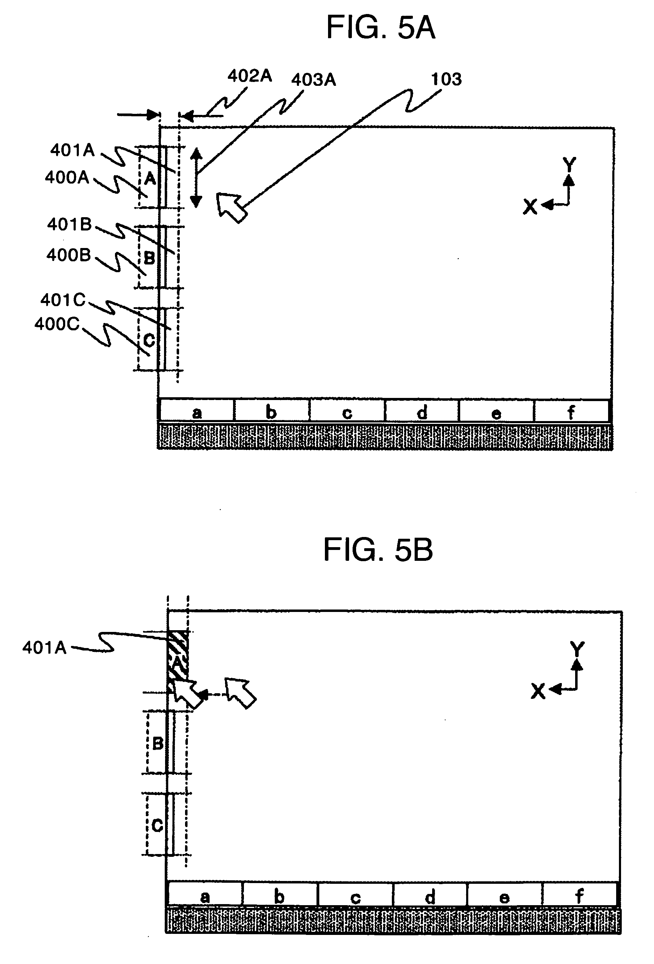

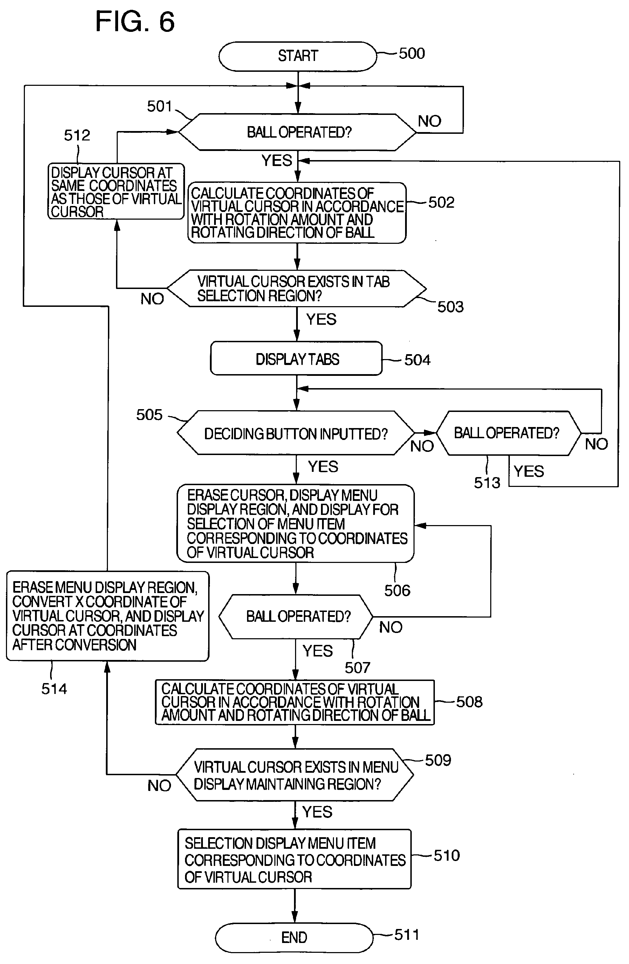

Subsequently, a display of the tabs 112 of the information display device according to the embodiment will be described by using Figs. 5A to 5D and 6. The first information display region 111 is a region to display various kinds of information and it is desirable that the region 111 is a wide region. It is also desirable from viewpoints of the visibility and improvement of the operability that the number of operation buttons is small and the information is displayed only in the case of necessity. Therefore, in the case of the embodiment, an embodiment in which the first information display region 111 is widely assured, the unnecessary display region is reduced as much as possible, and the operability is improved will be described.

In such a case that many crowded operation buttons are displayed and one of the operation buttons can be selected from them, there is such an inconvenience on the operation that it is difficult to select a desired operation button and another operation button is erroneously selected and decided. Thus, the fine adjustment of the cursor 103 is always necessary in order to select the desired operation button. In the embodiment, therefore, an embodiment in which the operability is improved by reducing the fine adjustment of the cursor 103 will now be described.

First, the tab display will be described by using Figs. 5A to 5D. Fig. 5A is a diagram showing that the cursor 103 is located in the first information display region 111. In this case, the whole portions of a tab A (400A), a tab B (400B), and a tab C (400C) corresponding to the tabs 112 are not displayed on the display screen 108, respectively. In place of them, a part of the tabs is displayed in a state where information A of the tab is not displayed. It is desirable to display in such a manner that a sign such as an arrow mark or the like is added to a portion where a part of the tabs is displayed and the operator is aware of the existence of the tabs so that he can know the existence of the tabs. In the description, although the tabs A, B, and C are displayed, since their displaying methods are the same, only a description of the tab A will be made. The tabs B and C are not a construction which is essential to the invention according to the embodiment and the invention can be applied to at least one of the tabs A to C.

A tab selection region 401A is provided for the tab A. The tab selection region 401A is specified by a width 402A in which the tab is displayed in the X direction and by a width 403A in which the tab is displayed also in the Y direction.

First, when the cursor 103 enters the tab selection region 401A by the operation of the ball 104b, the control unit 105 detects that the tab A has been selected, allows the tab A to be displayed onto the display screen 108, and allows the tab A to be displayed for the selection so that the operator can recognize that the tab A has been selected (Fig. 5B).

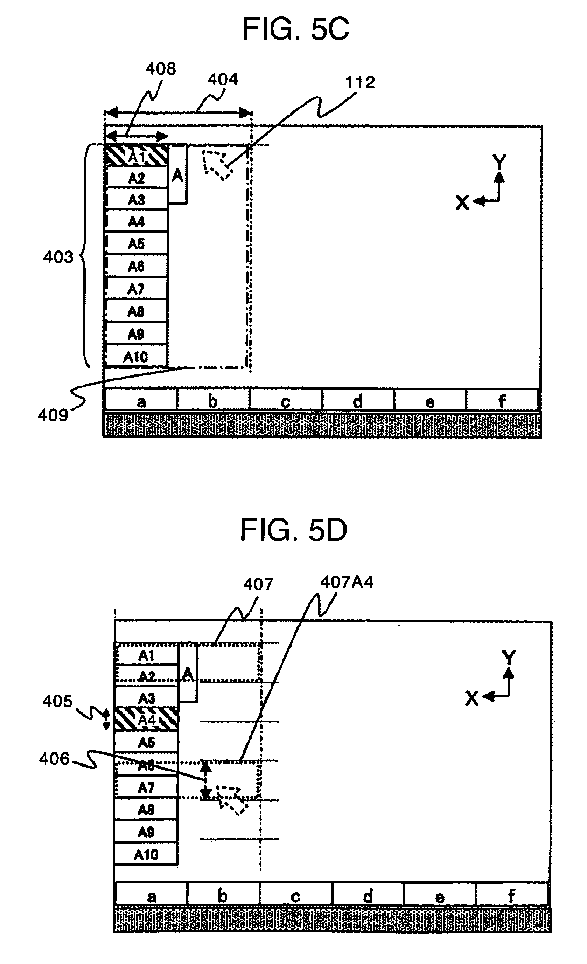

When the decision input is made by the operation button 104c, a menu display region 403 where menu items A1 to A10 in the tab A have been displayed is displayed. At the same time, the control unit 105 executes the operation to erase the cursor 103 from the display screen 108. The position where the cursor 103 exists, that is, the coordinates of the position where the virtual cursor 112 exists are detected at a point of time when the deciding operation has been executed, the coordinates are collated with a selection detection region 407, which will be described in Fig. 5D, and one of the menu items A1 to A10 is displayed for the selection. The virtual cursor 112 in Fig. 5C is deviated in the X direction and displayed for convenience of explanation.

When the menu display region 403 is displayed here, as shown by a width 404 in Fig. 5C, a menu display maintaining region 409 having a width wider than a width 408 in the X direction of the menu display region 403 which is actually displayed is provided. The menu display maintaining region 409 is region information which has previously been stored in the memory device 101. Even if the XY coordinates of the virtual cursor 112 moved, when the coordinates of the virtual cursor 112 exist in the region 409, the control unit 105 continuously displays the menu display region 403.

Subsequently, the operation in the case where the virtual cursor 112 moves in the Y direction will be described by using Fig. 5D. In Fig. 5D, each of the menu items A1 to A10 is provided with the selection detection region 407 corresponding thereto in a one-to-one relational manner. Although only the region corresponding to the menu item A4 is shown as 407A4, a selection detection region is allocated to each of the menu items A1 to A10.

One of the features of the embodiment here is a point that a width 406 of the selection detection region 407A4 is wider than a width 405 in the Y direction of the menu item A4 actually displayed. By using such a construction, even when the width 405 of each menu item is narrow in order to display many menu items, each menu item can be set into a selecting state by the width 406 which is further wide. Therefore, the fine adjustment by the operation of the ball 104b becomes unnecessary. Even if the crowded menu item group has been displayed, the desired menu item can be easily selected. Thus, it is easy to use and the operability is improved. For example, when the width 405 is equal merely to 1 cm as an actual dimension of the display screen, the fine adjustment in the upper/lower direction becomes necessary in order to control the Y coordinate of the virtual cursor so as to lie within the width of 1 cm. If the width 406 of the selection detection region is set to 3 cm, the virtual cursor can be relatively easily controlled so as to lie within the width of 3 cm without needing the fine adjustment. The reason why the cursor display is erased in Fig. 5C is that as shown in Fig. 5D, since the selection detection region 407A4 of the menu item A4 is a region which overlaps with the menu items A7 and A8, when the cursor 103 is displayed, in spite of a fact that the cursor 103 has been displayed on the menu item A7, the menu item A4 is displayed for the selection and there is a possibility that the erroneous operation is induced. Therefore, it is desirable that after the deciding operation of the tab, the control unit 105 executes the operation for erasing the cursor 103 from the display screen 108.

Since the menu display maintaining region 409 having the width 404 wider than the width 408 in the X direction of the menu display region 403 which is actually displayed is provided, when the menu display region 403 is displayed once, even if the virtual cursor 112 moves out of the range of the width in the X direction of the menu display region 403, the menu display is maintained. Therefore, the menu items A1 to A10 in the menu display region 403 can be easily selected and the operability is improved. Particularly, in the case of widely assuring the first information display region 111, since it is difficult to widely assure the width 408, it is desirable to provide such a menu display maintaining region 409. Particularly, since the operator cannot accurately recognize the coordinates of the virtual cursor because the cursor 103 is erased, it is desirable to provide such a menu display maintaining region 409.

Subsequently, the operating flow in the tab display will be described in detail by using Fig. 6. A start 500 indicates a state where the cursor 103 exists in the first information display region 111. First, the control unit 105 monitors whether or not the ball 104b of the trackball 104 has been operated (501). If there is no change in ball 104b, the display coordinates of the cursor 103 do not change but the same position is continuously displayed. When the ball 104b is operated here, that is, When the operator operated the ball 104b, the sensor built in the trackball main body 104a detects the operation information and transfers the information of the rotation amount and the rotating direction of the ball 104b to the control unit 105. That is, the control unit 105 detects the signal transferred from the trackball 104. The control unit 105 calculates the coordinates of the virtual cursor 112 after the operation on the basis of the coordinates of the virtual cursor 112 at the starting point of time and the information of the rotation amount and the rotating direction of the ball 104b (502). Subsequently, the control unit 105 grasps whether or not the coordinates of the virtual cursor 112 after the change are the coordinates in the preset tab selection region by collating with the region information stored in the memory device 101 (503). If it is detected that they do not exist in the range of the tab selection regions 401A to 401C, the cursor 103 is displayed at the same XY coordinates as those of the virtual cursor 112 after the change (512). As a result of the collation, if it is detected that the coordinates of the virtual cursor exist in the tab selection region, one of the tabs 400A to 400C corresponding to the tab selection regions 401A to 401C is displayed (504). Although not shown, the selection display may be performed for the tabs 400A to 400C. Subsequently, the control unit 105 monitors whether or not the deciding operation has been inputted by the operation button 104c (505). If the operation button is not inputted, the control unit continues the tab display and then monitors whether or not the ball has been operated (513). If the ball is not operated here, the tab display is continued. If the ball 104b has been operated, the processing routine is returned to 502 and the coordinates of the virtual cursor 112 are calculated again in accordance with the rotation amount and the rotating direction of the ball. Although not shown, if the coordinates of the virtual cursor are out of the tab selection region, the tab display is erased and the display screen is returned to the state of Fig. 5A.

Subsequently, the flow after 506 in which the deciding operation has been performed will be described. When the control unit 105 detects that the deciding operation has been inputted, the cursor 103 is erased from the display screen and the menu display region 403 where a plurality of menu items have sequentially been arranged is displayed. Whether the coordinates of the virtual cursor 112 correspond to the selection detection region 407 of which menu item is discriminated by collating with the region information which has previously been stored in the memory device 101 and the corresponding menu item is displayed for the selection (506). The control unit 105 monitors again whether or not the ball has been operated (507). If the ball is not operated, the state where the selection display is performed in 506 is maintained. If the ball 104b has been operated, the rotation amount and the rotating direction of the ball are detected and the coordinates of the virtual cursor 112 are calculated (508). As a result of the calculation, the control unit 105 collates the coordinates of the virtual cursor 112 after the change with the menu display maintaining region 409 which has previously been stored in the memory device 101 (509). As a result of the collation, if it is detected by the control unit 105 that the XY coordinates of the virtual cursor 112 are the XY coordinates in the menu display maintaining region 409, the control unit 105 displays for the selection of one of the menu items A1 to A10 corresponding to the coordinates of the virtual cursor 112 (510). The processing routine is finished here (511). Although the deciding operation is omitted, when the deciding operation by the operation button 104c is executed in a state where the menu item has been displayed for the selection, the control unit 105 detects the deciding operation. The processing execution unit 107 executes the operation allocated to the menu item. The control unit 105 reflects the processing result to the display screen 108 and displays.

A case where it is detected in 509 by the control unit 105 that the virtual cursor 112 does not exist at the XY coordinates in the menu display maintaining region 409 will now be described. As mentioned above, since the width 404 of the menu display maintaining region 409 is set to be wider than the width 408 at the X coordinate of the menu display region 403 which is actually displayed. Therefore, when the menu display region 403 is displayed once, since it is difficult that the coordinates of the virtual cursor 112 move out of the range of the menu display region 403, when the ball 104b is operated, even if the operator executed such an operation that the component in the X direction enters although the operator intends to move the ball in the Y direction, such a situation that the menu display region 403 is carelessly erased from the display screen 108 can be prevented. If the virtual cursor 112 moved out of the range of the menu display maintaining region 409, the control unit 105 executes the operation to erase the menu display region 403. At this time, the X coordinate of the virtual cursor 112 is changed to the X coordinate in the menu display maintaining region 409 and the actual cursor 103 is displayed by using the X coordinate after the change (514). Thus, a transition from a state where the menu display region has appeared to a state where it is erased can be executed by the natural operation. For example, when the menu display maintaining region 409 is provided as shown in Fig. 5C, the cursor 103 appears on the Y coordinate where the operation button c has been arranged. However, even in the case of such a display, by converting the X coordinate of the virtual cursor 112, the cursor 103 is displayed on the Y coordinate of the operation button a or b. Thus, the movement to the operation button a or b arranged on the menu display region 403 side can be smoothly made and the operability is improved. After that, the processing routine is returned to the state of start (511).

One of the features of the embodiment is a relation between the widths in the XY directions of the display of the menu items A1 to A10 in 510 and the widths in the XY directions of the selection detection region of the menu items A1 to A10 corresponding thereto. That is, there is such a feature that the selection detection region 407 for detecting that each of the menu items A1 to A10 has been selected is allocated to each of the menu items A1 to A10 arranged sequentially, and in the sequential arranging direction, the width of each selection detection region 407 is wider than the width of the region where each of the menu items A1 to A10 is displayed. Therefore, the menu items A1 to A10 can be easily selected and the operability is improved. Further, the menu items A1 to A10 are sequentially arranged in the vertical direction and the width of the region mentioned above is the width in the upper/lower direction. Consequently, even if the menu items A1 to A10 are crowded and displayed in the vertical direction, the menu items A1 to A10 can be easily selected and the operability is improved.

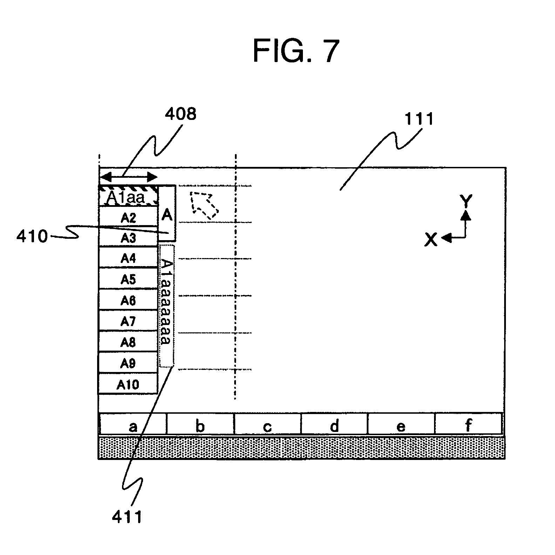

Subsequently, the display of the menu items A1 to A10 in the menu display region 403 will be described in detail by using Fig. 7. As for the menu items A1 to A10 in the menu display region 403, in the ultrasonic diagnosing device in the embodiment, portions of the human body such as heart, lung, and stomach are displayed. When the operator executes the deciding operation of those portions, the display of the first information display region 111 changes to a display suitable to diagnose each portion. In such a medical device, English language is generally used as menu items A1 to A10 and they are displayed by characters of the number larger than that of Japanese language. Therefore, it is desirable that the width 408 in which the menu items A1 to A10 are displayed is wide. However, if the width 408 of the menu items A1 to A10 is set to be too wide, the first information display region 111 is pressed and narrowed by them. It becomes difficult for the operator to read the information of the first information display region and the visibility and operability deteriorate. Therefore, in an embodiment according to Fig. 7, in order to prevent the deterioration in visibility and operability, the width 408 of the menu items A1 to A10 is properly assured and they are displayed so as to prevent an erroneous operation. The menu items A1 to A10 are not limited to English language but the invention can be also applied to a foreign language or Japanese language. Naturally, the invention is not limited to the ultrasonic diagnosing device.

An explanation will be made in detail hereinbelow. Fig. 7 is a diagram showing a state where the menu item A1 has been selected. Although the signs A1 to A10 have been allocated to the menu items so far, the names of the portions of the human body and the like are displayed in the actual device. In Fig. 7, it is assumed that A1 is expressed by a name of "Alaaaaaaa". However, in the case of such a long name as mentioned above, if it is intended to insert such a name into the width 408 of the menu display region 403, it is necessary to reduce the characters or to widely assure the width 408. According to such a method, the visibility of the menu item deteriorates. Therefore, as shown in Fig. 7, "A1aa" as a first part of a character string is displayed and "..." is displayed with respect to the remaining portion, thereby enabling the operator to recognize a fact that the characters have been omitted. However, according to such a method, in the case of the menu items such as "A1aaii" and "A1aauu" in the other menu items A4 and A5, they are displayed as "A1aa", respectively. Thus, even they are the different menu items, they are displayed by the same characters, so that the erroneous operation of the operator is caused. To suppress such an erroneous operation, therefore, "A1aaaaaaa" as a whole sentence is displayed in a selection menu item display region 411 existing on the lower side of the tab 410. In the embodiment, by vertically displaying the menu items, they can be displayed by using a very small width in the X direction and the pressure to the first information display region 111 can be prevented. As shown in Fig. 7, by inserting the name within the width in the X direction of the display of the tab 410, the whole sentence of the menu items can be displayed without substantially increasing the width, the operator can grasp the menu item selected by himself, and the erroneous operation can be prevented. Although the omission form using "..." is used in the embodiment, even if initial characters of a part of English or another language are displayed as a menu item without using "..." and the whole sentence is displayed in the selection menu item display region 411, a similar effect will be obtained. It is not always necessary that the selection menu item display region 411 is located on the lower side of the tab 410 but their upper/lower positions may be reversed. Particularly, since the selection menu item display region 411 exists in the upper/lower direction of the tag 410, the whole sentence is displayed at a position that is very close to the menu display region 403 during the selecting operation to which the operator pays attention. Therefore, since the operator can easily recognize the selected menu item while selecting the menu items A1 to A10, the operability is improved.

One of the features of the embodiment here is a point that the control unit displays the menu display region 403 for displaying a plurality of menu items A1 to A10 arranged in the vertical direction on the display screen and the control unit displays for the selection of the selected menu item and displays the selected menu item in the lateral direction. Particularly, when the menu items are displayed in the lateral direction and the display width of the menu item is wider than the width 408 of the menu display region 403, the control unit displays a part of the menu items A1 to A10 into the menu display region 403 and, further, displays one of the menu items A1 to A10 displayed laterally in the upper or lower direction of the display of the tab 110. Further, a point that the width in the upper/lower direction of the menu display region 403 is wider than the width 408 in the right/left direction is also a feature. This is because it is intended to assure the width in the X direction of the first information display region 111. This is also because when the width in the right/left direction is wider than the width in the upper/lower direction, if it is intended to vertically display the specific menu item in the lateral direction, it is necessary to display each character in a small size, and the visibility of the menu item deteriorates.

Although the information display device according to the invention has been described above, the embodiment has been described on the assumption that the movement amount of the virtual cursor 112 is the same as the movement amount of the cursor 103 for the movement amount of the ball 104b as a prerequisite. However, the invention is not always limited to the same movement amount. That is, although the widths of the menu display maintaining region 409 and the selection detection region 407 have been described, even if such a converting process for setting the movement amount of the virtual cursor into, for example, 1/n time as large as the movement amount of the ball 104b is executed at the time of displaying the menu display region 403, a similar effect is obtained. Therefore, naturally, various design modifications are possible without departing from the technical idea of the invention.
Although the embodiment has been described above, the invention is not limited to it but it will be obvious to a person with an ordinary skill in the art that various changes and modifications are possible within the spirit of the invention and the scope of claims thereof.

### BRIEF DESCRIPTION OF THE DRAWINGS

[Fig. 1] Fig. 1 is a device constructional diagram of an information display device according to the invention.
[Fig. 2] Fig. 2 is an explanatory diagram of a display screen according to the invention.
[Fig. 3] Fig. 3 is an explanatory diagram of a display screen according to the invention.
[Fig. 4] Fig. 4 is a flowchart according to the invention.
[Fig. 5A] Fig. 5A is an explanatory diagram of a display screen according to the invention.
[Fig. 5B] Fig. 5B is an explanatory diagram of a display screen according to the invention.
[Fig. 5C] Fig. 5C is an explanatory diagram of a display screen according to the invention.
[Fig. 5D] Fig. 5D is an explanatory diagram of a display screen according to the invention.
[Fig. 6] Fig. 6 is a flowchart according to the invention.
[Fig. 7] Fig. 7 is an explanatory diagram of a display screen according to the invention.

## Claims

1. An information display device comprising:
a display unit to which each of display regions of a first information display region for displaying various kinds of information into a predetermined region on a display screen and an operation button region which is arranged adjacently to the first information display region and is used to change the information displayed in the first information display region is allocated and which displays a cursor that is displayed at an arbitrary position on the display screen;
a cursor setting unit for setting a movement amount and a moving direction of the displayed cursor and generating an operation signal according to the movement amount and the moving direction of the cursor; and
a control unit for controlling displays of each region on the display unit and the cursor on the basis of the generated operation signal,
wherein when a fact that the cursor displayed in the first information display region has crossed a boundary with the operation button region and moved is detected from the operation signal generated by the cursor setting unit, the control unit controls so as to display the cursor into the operation button region.

2. The information display device according to claim 1, wherein
in the display unit, a second information display region is further allocated to a position where it is arranged adjacently to the operation button region, and
when an operation signal adapted to allow the cursor displayed in the first information display region to move toward the second information display region, that is, an operation signal of a movement amount larger than a distance between the position of the cursor and the boundary between the operation button region and the second information display region is detected, the control unit controls so as to move the cursor toward the operation button region and to display the cursor into the operation button region.

3. The information display device according to claim 1, wherein the control unit controls in such a manner that the second information display region is arranged in an almost edge portion of the display screen, an operation button group which is laterally long is arranged in the operation button region, and the operation button region is displayed on the display screen.

4. The information display device according to claim 1, wherein the control unit controls in such a manner that the second information display region is a non-display region of the cursor.

5. The information display device according to claim 1, wherein the control unit forms a plurality of menu items which are sequentially arranged in order to change the information displayed in the first information display region and to each of which a selection detection region adapted to detect that a menu item of the menu items is selected by the cursor setting unit is allocated.

6. The information display device according to claim 5, wherein the control unit forms the menu items in such a manner that in a sequential arranging direction of the plurality of menu items, a width of the selection detection region is wider than a width of a region of each of the menu items which are not selected by the cursor setting unit.

7. The information display device according to claim 5, wherein
the control unit allows the plurality of menu items to be arranged in a vertical direction of the display screen, and
a width of the selection detection region and a width of region of the menu item are widths in upper/lower directions for the display screen.

8. The information display device according to claim 5, wherein the control unit allows the cursor to be not displayed on the display screen when a display region of the menu item is displayed.

9. The information display device according to claim 5, wherein in the case where the cursor is displayed in a tab display region provided in order to change the menu item, the control unit controls in such a manner that the cursor displays change information of the menu item in the tab display region.

10. The information display device according to claim 9, wherein the control unit changes and displays a display region of the menu item by detecting a deciding operation of the displayed tab display region.

11. The information display device according to claim 1, wherein the control unit allows a menu display region for displaying a plurality of menu items arranged in a vertical direction of the display screen to be displayed, allows the menu item selected by the cursor setting unit to be displayed for selection, and allows the selected menu item to be arranged again in a lateral direction of the display screen and displayed.

12. The information display device according to claim 11, wherein
a tab display is further provided for the menu display region, and
the control unit allows the menu items to be displayed in the lateral direction of the display screen, and when a display width of the menu items is wider than a width of the menu display region, the control unit allows a part of the menu items to be displayed in the menu display region and further allows the menu items displayed in the lateral direction of the display screen to be displayed in an upper or lower direction of the tab display.
